(19)

Europäisches
Patentamt
European
Patent Office
Office européen
des brevets

(11) **EP 4 336 157 A1**

(12) **EUROPEAN PATENT APPLICATION**

(43) Date of publication:
**13.03.2024 Bulletin 2024/11**

(21) Application number: **22194217.0**

(22) Date of filing: **06.09.2022**

(51) International Patent Classification (IPC):
**G01J 3/46** $^{(2006.01)}$      **G01N 21/27** $^{(2006.01)}$

(52) Cooperative Patent Classification (CPC):
**G01J 3/463; G01J 3/462; G01N 21/274**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **X-Rite Europe GmbH
8105 Regensdorf (CH)**

(72) Inventors:
• **RUMP, Martin
8105 Regensdorf (CH)**
• **SCHWARTZ, Christopher
8105 Regensdorf (CH)**

(74) Representative: **Jonas, Hans-Hermann
X-Rite Europe GmbH
Althardstrasse 70
8105 Regensdorf (CH)**

(54) **METHOD AND SYSTEM FOR COLOR FORMULATION**

(57)    A color formulation system (100) receives spectral target data (111) of a target sample (110), which were acquired under a first set of measurement conditions. A database comprises optical data (104) that are associated with a second set of measurement conditions. A transformation engine (101) receives the spectral target data and transforms them into transformed target data (112), which represent an expected spectral response of the target sample under the second set of measurement conditions. The formulation engine predicts a recipe (140) for a candidate material using the transformed target data and the optical data in the database. In other embodiments, the transformation engine receives spectral calibration data associated with the second set of measurement conditions and transforms them into transformed calibration data associated with the first set of measurement conditions, which are then used to determine the optical data in the database.

FIG. 1

EP 4 336 157 A1

**Description**

TECHNICAL FIELD

The present invention relates to a method of color formulation and to a color formulation system that is configured for carrying out the method.

PRIOR ART

Finding a color recipe that matches a desired target color can be a lengthy and tedious process. Traditionally, color formulation has been an entirely manual process. Success largely depends on the experience of the color professional who selects the colorants and defines the candidate formulae. Even experienced specialists often need several iterations until a satisfactory match is obtained.

Over the last few decades, increasingly sophisticated color formulation software has been introduced to aid the color professional in obtaining a color formulation within defined tolerances with fewer iterations. Target data that are representative of a spectral response of a target sample are provided to the formulation software, and the formulation software proposes one or more recipes for a candidate material that is expected to match an appearance of the target sample. The central piece of the color formulation software is the so-called "formulation engine". This is a collection of algorithms that can predict the reflectance or transmission of a certain mixture of ingredients (called "formula" or "recipe") and create or correct recipes to match a given target reflectance or transmission. The central part of the engine is the simulation of light interacting with a certain mixture of ingredients. For this, the engine needs optical data that describe the light transport properties of the individual ingredients. The optical data are generated from calibration data, which have been obtained by measurements of specially prepared calibration samples containing the ingredient together with a binder and at most very few other additional materials.

The calibration data and the target data are determined with a suitable spectrophotometer. Many different spectrophotometers with different geometries of light sources and light detectors and with different types of light sources exist. The best-suited type of spectrophotometer generally depends on the type of material and on the actual use case.

For instance, car paints often exhibit gonioapparent behavior, i.e., the appearance of a car paint often depends on the angles of illumination and viewing. Accordingly, for formulating car paints, often multi-angle spectrophotometers are used, which determine spectral information for a plurality of combinations of well-defined illumination and observation directions.

As another example, for measuring wall paints and other typical retail paints that do not have gonioapparent properties, often integrating sphere spectrophotometers are used. An integrating sphere spectrophotometer comprises a hollow spherical cavity delimited by a diffusely reflective white inner surface, having a measurement port at which the sample is placed, at least one entrance port for illumination and at least one exit port for observation. The integrating sphere causes a uniform scattering or diffusing effect. Light rays incident on any point on the inner surface are, by multiple scattering reflections, distributed equally to all other points. The effects of the original direction of light are minimized. The exit port is often arranged at an angle of 8° to the surface normal of the sample. The resulting geometry will in the following be referred to as "D/8". A gloss trap may be arranged at the specular direction from the exit port to exclude the specular contribution to the total reflectance. In this case, the geometry will in the following be designated as "specular excluded" or briefly "spex". If a gloss trap is absent, the geometry will be designated as "specular included" or "spin".

As yet another example, in some less sophisticated use cases, spectrophotometers having only a single illumination direction and a single observation direction are used. The illumination direction is often at 45° to the surface normal, and the observation direction is often at 0° to the surface normal. Such instruments are called 45/0 spectrophotometers. Sometimes the illumination light source forms a ring, illuminating the measurement spot at 45° in a complete circle. In other examples, three or more discrete light sources are distributed over the circle.

Each formulation engine requires spectral target data that have been acquired under specific measurement conditions (measurement geometry and illumination characteristics).

For instance, a formulation engine designed for receiving multi-angle target data generally cannot handle D/8 target data, and vice versa. Each formulation engine further requires that the optical data have been generated from calibration data that were determined using the same measurement conditions as the target data. In practice, this means that the target data need to be determined with the same type of spectrophotometer as the calibration data. Each formulation engine is thus tied to a specific type of spectrophotometer.

However, it may happen that a user in the field has access to only a different type of spectrophotometer than the one to which the formulation engine is tied. For instance, the user may have access only to a multi-angle spectrophotometer, while the formulation engine requires D/8 data from an integrating sphere spectrophotometer. In such situations, it has hitherto not been possible to use the formulation engine.

The fact that a formulation engine is tied to specific measurement conditions also hampers innovation in the field of color formulation. If a new and possibly better type of spectrophotometer is introduced in the market, a new formulation engine must be developed, and calibration measurements must be completely redone with the new type of spectrophotometer. For a large library of colorants, this can be an extremely time- and costintensive task. This obstacle may thwart efforts to introduce new and possibly better spectrophotometers to environments where formulation software is used.

SUMMARY OF THE INVENTION

It is an object of the present invention to provide a color formulation system that enables the use of a formulation engine even if the measurement conditions under which the target data or the calibration data were obtained are not supported by the formulation engine. Specifically, it is an object of the present invention to provide a system for color formulation that can be used even if the target data have been obtained by a different type of instrument than the calibration data.

This object is achieved by a color formulation system according to claim 1 or 3. Further embodiments of the invention are laid down in the dependent claims. Corresponding methods are also disclosed.

In a first aspect, the present invention provides a color formulation system comprising a transformation engine, a formulation engine, and a first database,

wherein the color formulation system is configured to receive spectral target data that are representative of a spectral response of a target sample under a first set of measurement conditions, the first set of measurement conditions including at least one first measurement geometry and at least one first illumination characteristic,
wherein the first database comprises optical data that are representative of light transport characteristics of a plurality of colorants under a second set of measurement conditions, the second set of measurement conditions including at least one second measurement geometry and at least one second illumination characteristic, at least one of the measurement conditions in the second set being different from at least one of the measurement conditions in the first set;
wherein the transformation engine is configured to receive spectral input data and to carry out a transformation of said spectral input data into transformed spectral data, the spectral input data being the spectral target data and the transformed spectral data being transformed target data representing a predicted spectral response of the target sample under the second set of measurement conditions, and
wherein the formulation engine is configured to predict a recipe for a candidate material that is expected to match an appearance of the target sample, using the transformed target data and the optical data in the first database.

According to the first aspect, the spectral target data are transformed into transformed target data. The transformed target data represent a predicted spectral response of the target sample under different measurement conditions than the conditions under which the target data were actually obtained. The transformed target data are then used by the formulation engine. In this manner, spectral target data can be used for formulation even if the formulation engine does not support the measured spectral target data or if the optical data that are used by the formulation engine are associated with different measurement conditions than the measurement conditions under which the target data were obtained.

The color formulation system may further comprise a calibration engine for generating the optical data from calibration data. Specifically, the color formulation system may comprise a second database comprising spectral calibration data that are representative of spectral responses of a plurality of calibration samples under the second set of measurement conditions, and a calibration engine configured to compute said optical data based on the calibration data in the second database and to store the computed optical data in the first database. Suitable calibration engines are known in the art.

In a second aspect, the present invention provides a color formulation system comprising a transformation engine, a formulation engine, a calibration engine, a first database, and a second database,

wherein the color formulation system is configured to receive spectral target data that are representative of a spectral response of a target sample under a first set of measurement conditions, the first set of measurement conditions including at least one first measurement geometry and at least one first illumination characteristic,
wherein the second database comprises spectral calibration data that are representative of spectral responses of a plurality of calibration samples under a second set of measurement conditions, the second set of measurement conditions including at least one second measurement geometry and at least one second illumination characteristic, at least one of the measurement conditions in the second set being different from at least one of the measurement conditions in the first set;

wherein the transformation engine is configured to receive spectral input data and to carry out a transformation of said spectral input data into transformed spectral data, the spectral input data being the spectral calibration data in the second database and the transformed spectral data being transformed calibration data representing an expected spectral response of the calibration samples under the first set of measurement conditions,

wherein the calibration engine is configured to compute optical data based on the transformed calibration data and to store the computed optical data in the first database, the computed optical data being representative of light transport characteristics of a plurality of colorants under the first set of measurement conditions, and

wherein the formulation engine is configured to predict a recipe for a candidate material that is expected to match an appearance of the target sample, using the spectral target data and the optical data in the first database.

According to the second aspect, the calibration data are transformed into transformed calibration data, and optical data are generated from the transformed calibration data. This makes it possible to use calibration data that were measured using a certain type of spectrophotometer with a formulation engine that was developed for a different type of spectrophotometer. Thereby, existing databases of calibration data may be reused when a new and possible better formulation engine has been developed, without a need of repeating all calibration measurements from scratch.

The color formulation system may further comprise a third database comprising additional optical data that have been obtained from calibration measurements of calibration samples under the first set of measurement conditions, and the formulation engine may additionally use the third database for predicting the recipe. In this manner, optical data obtained by calibration measurements under the first and second sets of measurement conditions may both be used. In particular, "legacy" calibration data obtained under the second set of measurement conditions for which an "old" formulation engine was available may be augmented by "new" calibration data obtained under first set of measurement conditions that are required by a "new" formulation engine.

The color formulation system may comprise a plurality of formulation engines that may be alternatively used for predicting the recipe. The formulation system may then comprise a user interface ("digital agent") that is configured to prompt a user to make a selection from the plurality of formulation engines to select the formulation engine that is to be used for predicting the recipe.

The user interface may be executed on a different physical device than the formulation engine. In particular, the color formulation system may be cloud based, with different components of the color formulation system being implemented on different physical devices, which may be remote from each other and may be connected via a network, in particular, the Internet.

In some embodiments, the user interface may be configured to carry out one or more of the following steps:

a) Prompting the user to provide information about the type of material to which the spectral target data pertain, e.g., wall paint or car paint. This may be done by presenting the user with a list of possible material types and prompting the user to make a selection from the list.

b) Prompting the user to provide information for identifying the first set of measurement conditions. This may be done by presenting the user with a list and prompting the user to make a selection from the list. For instance, the user may be presented with a list of makes and models of measurement devices such as spectrophotometers, as a selection of a particular make and model of measurement device may automatically define the measurement conditions.

c) Prompting the user to specify a formulation engine, e.g., by presenting the user with a list of suitable formulation engines and prompting the user to make a selection from the list.

d) Optionally, determining whether a transformation is required for using the formulation engine and outputting information relating to the need of a transformation to the user.

Instead of step d), the user interface may be configured to present a list of suitable formulation engines to the user together with information whether or not a transformation is required for using each of the formulation engines.

In a third aspect, the present invention provides a system for determining optical data to be used in color formulation, the optical data being representative of light transport characteristics of a plurality of colorants under a first set of measurement conditions, the first set of measurement conditions including at least one first measurement geometry and at least one first illumination characteristic, the system comprising:

a transformation engine, a calibration engine, a first database, and a second database,

wherein the second database comprises spectral calibration data that are representative of spectral responses of a plurality of calibration samples under a second set of measurement conditions, the second set of measurement conditions including at least one second measurement geometry and at least one second illumination characteristic, at least one of the measurement conditions in the second set being different from at least one of the measurement conditions in the first set,

wherein the transformation engine is configured to receive spectral input data and to carry out a transformation of said spectral input data into transformed spectral data, the spectral input data being the spectral calibration data in the second database and the transformed spectral data being transformed calibration data representing a predicted spectral response of the calibration samples under the first set of measurement conditions, and

wherein the calibration engine is configured to compute optical data based on the transformed calibration data and to store the computed optical data in the first database, the computed optical data being representative of light transport characteristics of a plurality of colorants under the first set of measurement conditions.

The system of the third aspect thus computes and stores optical data to be used by any suitable formulation engine, using similar concepts as the system of the second aspect of the present invention.

The transformation engine may be configured to receive material information and to take the material information into account when carrying out said transformation. The material information may comprise at least one of the following items of information:

- information about colorant types associated with the spectral input data;
- information about one or more binders of a material associated with the spectral input data;
- information about surface properties of a material associated with the spectral input data;
- information about refraction properties of a material associated with the spectral input data;
- information about scattering properties of a material associated with the spectral input data;
- information about fluorescence properties of a material associated with the spectral input data;
- information about polarization properties of a material associated with the spectral input data;
- information about a substrate on which a material associated with the spectral input data has been applied; and
- information about one or more pre-existing recipes that yield an approximate match to the appearance of the target sample.

The material information may not only be used by the transformation engine, but may also be used by the formulation engine. In particular, the formulation engine may use the information about one or more pre-existing recipes when predicting the recipe that is expected to match the appearance of the target sample, thus effectively "correcting" the pre-existing recipes.

In some embodiments, the first and second measurement geometries are integrating sphere geometries, one of said integrating sphere geometries being of a specular-included type and the other one being of a specular-excluded type. The transformation may then comprise computing a refraction term and adding the refraction term to the spectral input data or subtracting the refraction term from the spectral input data, the refraction term being indicative of a fraction of light being reflected into a specular direction.

In some embodiments, the transformation engine is configured to carry out the steps of:

determining at least one parameter of a model of light transport, in particular, of a BRDF model, based on the spectral input data;

computing the transformed spectral data using the model of light transport.

Using a BRDF model is particularly useful if the measurement geometry associated with the spectral input data is a first multi-angle geometry and the measurement geometry associated with the transformed spectral data is a second multi-angle geometry, a fixed-angle geometry, in particular, a 45/0 geometry, or an integrating sphere geometry. In such cases, the transformed spectral data can be readily calculated by evaluating the BRDF at the appropriate measurement geometry, or by integrating the BRDF over a hemisphere in case of an integrating sphere geometry.

In some embodiments, one of the first and second measurement geometries is an integrating sphere geometry and the other one is a fixed-angle geometry, in particular, a 45/0 geometry. The transformation comprises computing an integral over fractions of light that are able to enter and exit a material associated with the spectral input data, the integral being executed over a hemisphere, and relating said integral to a fraction of light that is able to enter and exit the material under the fixed-angle geometry.

A computer-implemented method of color formulation corresponding to the first aspect of the invention comprises:

receiving spectral target data that are representative of a spectral response of a target sample under a first set of measurement conditions, the first set of measurement conditions including at least one first measurement geometry and at least one first illumination characteristic,

retrieving, from a first database, optical data that are representative of light transport characteristics of a plurality of colorants under a second set of measurement conditions, the second set of measurement conditions including at least one second measurement geometry and at least one second illumination characteristic, at least one of the measurement conditions in the second set being different from at least one of the measurement conditions in the first set;

carrying out a transformation of spectral input data into transformed spectral data, the spectral input data being the spectral target data and the transformed spectral data being transformed target data representing an expected spectral response of the target sample under the second set of measurement conditions, and

predicting a recipe for a candidate material that is expected to match an appearance of the target sample, using the transformed target data and the optical data in the first database.

A computer-implemented method of color formulation corresponding to the second aspect of the invention comprises:

receiving spectral target data that are representative of a spectral response of a target sample under a first set of measurement conditions, the first set of measurement conditions including at least one first measurement geometry and at least one first illumination characteristic,

retrieving, from a second database, spectral calibration data that are representative of spectral responses of a plurality of calibration samples under a second set of measurement conditions, the second set of measurement conditions including at least one second measurement geometry and at least one second illumination characteristic, at least one of the measurement conditions in the second set being different from at least one of the measurement conditions in the first set;

carrying out a transformation of spectral input data into transformed spectral data, the spectral input data being the spectral calibration data and the transformed spectral data being transformed calibration data representing an expected spectral response of the calibration samples under the first set of measurement conditions,

computing optical data based on the transformed calibration data and storing the computed optical data in a first database, the computed optical data being representative of light transport characteristics of a plurality of colorants under the first set of measurement conditions, and

predicting a recipe for a candidate material that is expected to match an appearance of the target sample, using the spectral target data and the optical data in the first database.

These methods may or may not include a step of determining the spectral target data through a measurement. In particular, the methods may include at least one of:

carrying out at least one measurement of the target sample using a spectrophotometer; and
transmitting the spectral target data from the spectrophotometer to the color formulation system, in particular, via a network.

A computer-implemented method of determining optical data according to the third aspect is also provided. In the method, optical data to be used in color formulation are determined, the optical data being representative of light transport characteristics of a plurality of colorants under a first set of measurement conditions, the first set of measurement conditions including at least one first measurement geometry and at least one first illumination characteristic, the method employing a first database and a second database. The method comprises:

retrieving, from the second database, spectral calibration data that are representative of spectral responses of a plurality of calibration samples under a second set of measurement conditions, the second set of measurement conditions including at least one second measurement geometry and at least one second illumination characteristic, at least one of the measurement conditions in the second set being different from at least one of the measurement conditions in the first set;

carrying out a transformation of the spectral calibration data in the second database into transformed calibration data representing a predicted spectral response of the calibration samples under the first set of measurement conditions; and

computing optical data based on the transformed calibration data and storing the computed optical data in the first database, the computed optical data being representative of light transport characteristics of a plurality of colorants under the first set of measurement conditions.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1            shows a highly schematic representation of a color formulation system and an associated method according to a first embodiment;

Fig. 2            shows a highly schematic representation of a color formulation system and an associated method according to a second embodiment;

Fig. 3            shows a schematic hardware-oriented block diagram of a color formulation system according to an embodiment of the present invention;

Fig. 4            shows a schematic illustration of a user interface;

Figs. 5A-5C       show schematic sketches of three different 45/0 geometries;

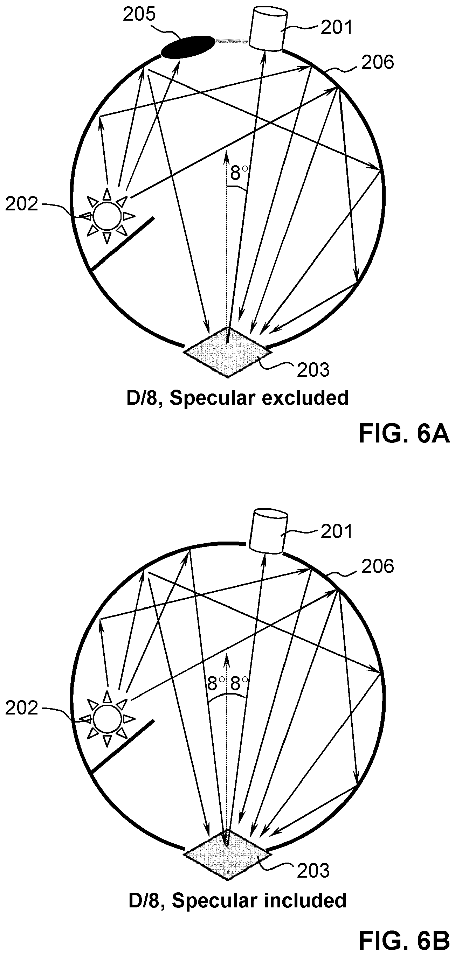

Figs. 6A and 6B   show schematic sketches of two different integrating sphere geometries; and

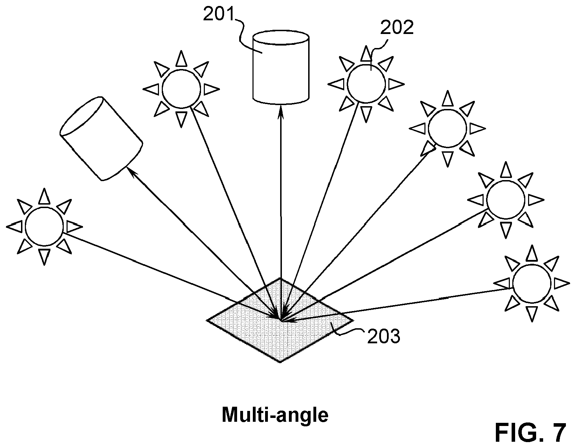

Fig. 7            shows a schematic sketch of a multi-angle measurement geometries in a multi-angle spectrophotometer.

DESCRIPTION OF PREFERRED EMBODIMENTS

Definitions

In the present disclosure, references in the singular may also include the plural. Specifically, the word "a" or "an" may refer to one, or one or more, unless the context indicates otherwise.

In this document, the term "lamp" is used to designate any type of light source. It is to be understood that the term "lamp" encompasses not only incandescent lamps, but also other types of light sources such as discharge lamps, LEDs, lasers etc. A lamp may be configured as a "directional" light source, illuminating a measurement spot on a measurement surface from a well-defined narrow range of illumination direction within a small solid angle, or it may be configured as a "diffuse" light source, illuminating the measurement spot from a large continuous range of illumination directions that defines a comparatively large solid angle.

A "spectrophotometer" is a device for determining the response of a surface or material at a plurality of different wavelengths or spectral bands under illumination with visible light and/or UV light, in reflection and/or transmission.

The term "fixed-angle geometry" is to be understood as relating to a geometry where a sample (target or calibration sample) is illuminated with a directional light source located at a single polar angle relative to a surface normal of the sample and is observed along a single direction. An example of a fixed-angle geometry is the well-known "45/0" geometry, wherein the sample is illuminated from an angle of 45° relative to the surface normal and is observed along the surface normal. A spectrophotometer that is capable of measurements under a fixed-angle geometry is called a fixed-angle spectrophotometer. Specifically, a spectrophotometer that is configured to carry out spectral measurements under a 45/0 geometry is called a 45/0 spectrophotometer. Examples of 45/0 spectrophotometers include the models i1 Paint, 962 and 964 available from X-Rite.

The term "multi-angle geometry" is to be understood as relating to a geometry where the sample is illuminated and observed under a plurality of different fixed-angle geometries, and separate spectral data are measured for each of these fixed-angle geometries. A spectrophotometer that is capable of measurements under a multi-angle geometry is called a multi-angle spectrophotometer. Examples of multi-angle spectrophotometers include the benchtop model TAC7 or the handheld models MA-T6 or MA-T12 available from X-Rite.

The term "integrating sphere geometry" is to be understood as relating to a geometry wherein the sample to be measured is placed under a measurement port of an integrating sphere having a measurement port, at least one entrance port for illumination and at least one exit port for observation. A spectrophotometer having an integrating sphere geometry is called an integrating sphere spectrophotometer. Examples of integrating sphere spectrophotometers are the models Ci7860 and Ci7500 of X-Rite. If the exit port (or, equivalently, the entrance port) is arranged at an angle of 8° to the surface normal of the sample, an integrating sphere geometry is referred to as "D/8". If a gloss trap is arranged at the specular direction from the exit port (or, equivalently, entrance port) to exclude the specular contribution to the total reflectance, an integrating sphere geometry is designated as "specular excluded" or briefly "spex". If no gloss trap us present, the geometry is designated as "specular included" or "spin".

The term "visual appearance" or briefly "appearance" is to be understood broadly as the way in which an object reflects and transmits light, including but not limited to, how individuals viewing the object perceive color and surface texture of the object in various viewing conditions. Appearance also includes instrumented measurements of how an object reflects and transmits light. One aspect of visual appearance is color. The "color" of an object is determined by the parts of the spectrum of incident white light that are reflected or transmitted without being absorbed. Another aspect of visual appearance may be texture. The term "texture" is to be broadly understood as referring to the spatial variation of appearance across the surface of the material, both on a microscopic or mesoscopic scale (i.e., on a scale on which individual structure elements can normally not be discerned by the naked eye) and on a macroscopic scale (i.e., on a scale on which individual structure elements can be discerned by the naked eye). Texture as understood in the present disclosure includes phenomena like coarseness, sparkle, and variations of surface topography.

The term "colorant" is to be understood as a constituent of a material that provides the appearance of color when light it reflected from it or transmitted through it. Colorants include pigments and dyes. A "pigment" is a colorant that is usually insoluble in a base constituent material. A pigment can be from natural or synthetic sources. A pigment can comprise organic and inorganic constituents. The term "pigment" also encompasses so-called "effect pigments", which produce special effects in a material. Examples include interference pigments and reflective particles or flakes. A "dye" is a colorant that is usually soluble in a base constituent material.

The term "recipe" is to be understood as relating to a collection of information that determines how a material is to be prepared. The material may comprise a coating material, such as automotive paint, a solid material, such as plastic materials, a semi-solid material, such as gels, and combinations thereof. The recipe includes, in particular, the concentrations of the constituents of which the material is composed, such as a base and colorants. A material that has been prepared according to a recipe may also be called a "formulation".

The term "database" refers to an organized collection of data that can be accessed electronically by a computer system. In simple embodiments, the database can be a searchable electronic file in an arbitrary format. Examples include a Microsoft Excel™ spreadsheet or a searchable PDF document. In more sophisticated embodiments, a database can be a relational database that is maintained by a relational database management system using a language like SQL. A database can be maintained locally in a single storage device, or it can be maintained in the form of data that is distributed over a plurality of possibly remote storage devices.

The term "computer" or "computing device" refers to any device that can be instructed to carry out sequences of arithmetic or logical operations automatically via a program. Without limitation, a computer can take the form of a desktop computer, a notebook computer, a tablet computer, a smartphone, a programmable digital signal processor etc. A computer generally includes at least one processor and at least one memory device. A computer may be a subunit of another device, such as a spectrophotometer. A computer may be configured to establish a wired or wireless connection to another computer, including a computer for querying a database. A computer can be configured to be coupled to a data input device like a keyboard or a computer mouse or to a data output device like a display or a printer via a wired or wireless connection.

A "computer system" is to be broadly understood as encompassing one or more computers. If the computer system comprises more than one computer, these computers do not necessarily need to be at the same location. The computers within a computer system may communicate with one another via wired or wireless connections.

A "processor" is an electronic circuit which performs operations on an external data source, in particular, a memory device.

A "memory device" or briefly "memory" is a device that is used to store information for use by the processor. The memory device may include volatile memory, as for random-access memory (RAM), and nonvolatile memory, as for read-only memory (ROM). In some embodiments, the memory device may include a non-volatile semiconductor memory device such as an (E)EPROM or a flash memory device, which may take the form of, e.g., a memory card or a solid-state disk. In some embodiments, the memory device may include a mass storage device having mechanical components, like a hard disk. The memory device can store a program for execution by the processor. A non-volatile memory device may also be called a non-volatile computer-readable medium.

A "program" is a collection of instructions that can be executed by processor to perform a specific task.

A "wired connection" is a connection via an electrical conductor. A wired connection can include one or more cables. A "wireless connection" is a connection that includes the electromagnetic transfer of information between two or more points that are not connected by an electrical conductor. Wireless connections include connections via WiFi™, Bluetooth™, 3G/4G/5G mobile networks, optical communications, infrared, etc.

First embodiment: measurement conditions for target sample differ from measurement conditions required by formulation engine

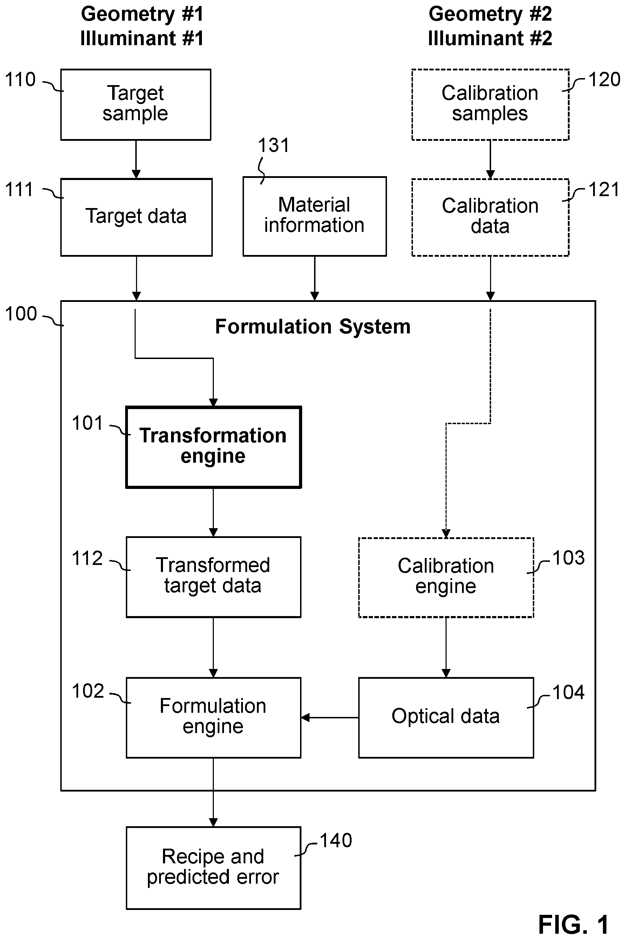

Fig. 1 shows a highly schematic representation of a color formulation system 100 and an associated method according to a first embodiment. Spectral target data 111 are acquired by carrying out spectral measurements on a target sample 110, using a spectrophotometer with a first set of measurement conditions. The first set of measurement conditions includes a first measurement geometry ("Geometry #1") and a first set of illumination characteristics ("Illuminant #1 ").

The formulation system comprises a formulation engine 102, which is configured to predict one or more recipes 140 for a candidate material that is expected to match the appearance of the target sample 110. The formulation engine 102 may do this prediction by minimizing a suitable difference norm between the appearance of the target sample 110 and the predicted appearance of the candidate material. For instance, the difference norm may be ΔE in the well-known CIELAB color space or any other, possibly vendor-proprietary difference norm. In order to be able to select the recipe that is expected to provide the best match, the formulation engine 102 may also compute a predicted error for each of the predicted recipes. The predicted error may be expressed as any suitable color difference norm, which may or may not be the same difference norm as the one used for optimization.

For carrying out the prediction tasks, the formulation engine 102 accesses optical data 104 that are representative of light transport characteristics of a plurality of colorants under a second set of measurement conditions. The second set of measurement conditions includes a second measurement geometry ("Geometry #2") and a second set of illumination characteristics ("Illuminant #2"). The second set of measurement conditions is different from the first set of measurement conditions. In particular, the second measurement geometry may be different from the first measurement geometry. For instance, the second measurement geometry may be a multi-angle geometry, while the first measurement geometry may be an integrating-sphere geometry. In addition or in the alternative, the second set of illumination characteristics may be different than the first set of illumination characteristics. In particular, spectral characteristics may be different, i.e., Illuminant#2 may have a different spectrum than Illuminant #1.

The formulation engine 102 expects, as its input, target data that have been acquired under the second set of measurement conditions. However, the target data 111 have been acquired under the first set of measurement conditions. Therefore, use of the formulation engine 102 would normally be impossible or lead to wrong results.

In order to make it possible to use the formulation engine 102 with the target data 111 nevertheless, the formulation system 100 comprises a transformation engine 101. The transformation engine 101 receives the spectral target data 111 and transforms them into transformed target data 112. The transformed target data 112 now represent an expected or predicted spectral response of the target sample 110 under the second set of measurement conditions.

The transformed spectral target data 112 can now be provided to the formulation engine 102 for carrying out its prediction tasks. A great number of formulation algorithms are known in the art, different algorithms being tailored to different types of materials and different measurement conditions.

Examples for transformations that may be carried out by the transformation engine 102 will be described further below.

Determination of optical data

The optical data 104 are representative of light transport characteristics of a plurality of colorants. In particular, the optical data 104 may include an absorption coefficient and/or a scattering coefficient for each of a plurality of spectral components for each of the colorants.

In some embodiments, the optical data 104 may further include information about bronzing, i.e., about the manner in which the colorant concentration in a material influences the surface reflection properties of the material. For instance, some colorants may cause a roughening of the surface at high concentrations, which makes surface reflections more diffuse than at lower concentrations. In some embodiments, the optical data 104 may include information about a directionality characteristic of a colorant. For instance, effect pigments such as metallic flakes may cause strong specular reflections on a surface of the effect pigment, causing a sparkle effect. In some embodiments, the optical data 104 may include information about how strongly a colorant is able to affect the directionality characteristic of other colorants. In some embodiments, the optical data 104 may include information about nonlinear effects, i.e., effects which depend on colorant concentration in a nonlinear manner. In some embodiments, the optical data 104 may include information about the interaction of a colorant with a substrate, e.g., how strongly the colorant is able to permeate into the substrate.

The optical data 104 may have been obtained with the aid of calibration data 121 which have been determined by spectral measurements on a large number of calibration samples 120, using a spectrophotometer with the second set of measurement conditions.

For determining the calibration data 121, typically calibration samples 120 are prepared as follows: For each colorant, a plurality of calibration samples are prepared, each calibration sample comprising the colorant in a neutral binder at a different concentration. In addition, calibration samples comprising the colorant in the binder together with white and/or black pigment may be prepared. For inks or paint coatings, calibration samples on different substrates (e.g., black and white substrates or rough and smooth substrates) may additionally be prepared. In the case of a paint coating, calibration samples with different thicknesses of the paint coating may be prepared. In some cases, calibration samples comprising a mixture of a certain colorant with other colorants may be prepared.

For each of the calibration samples, one or more spectral measurements are carried out to obtain the associated calibration data.

The calibration data 121 of all calibration samples 120 are fed to a calibration engine 103, which computes the optical data 104 based on the calibration data 121. Algorithms for determining optical data based on calibration data are well known in the art. The most suitable algorithm strongly depends on the type of material of the calibration samples and on the types of colorants that are being used.

In an ideal world, the optical data that are determined in this manner would be pure material constants, which are completely independent of the measurement conditions under which the calibration data have been acquired. However, in reality, the optical data exhibit a substantial dependence on the measurement conditions. Therefore, these optical data can normally only be used together with a formulation engine that receives, at its input, target data that have been acquired under the same set of measurement conditions. Otherwise, the predicted recipes will not lead to a good match with the appearance of the target sample.

Normally, optical data are determined in a laboratory setting and provided to the formulation system 100 in a database, i.e., the formulation system 100 would normally not contain the calibration engine 103. For this reason, the calibration engine 103 is indicated in Fig. 1 with a dotted line. The formulation engine 102 then accesses the optical data 104 in the database.

Second embodiment: measurement conditions for calibration samples differ from measurement conditions required by formulation engine

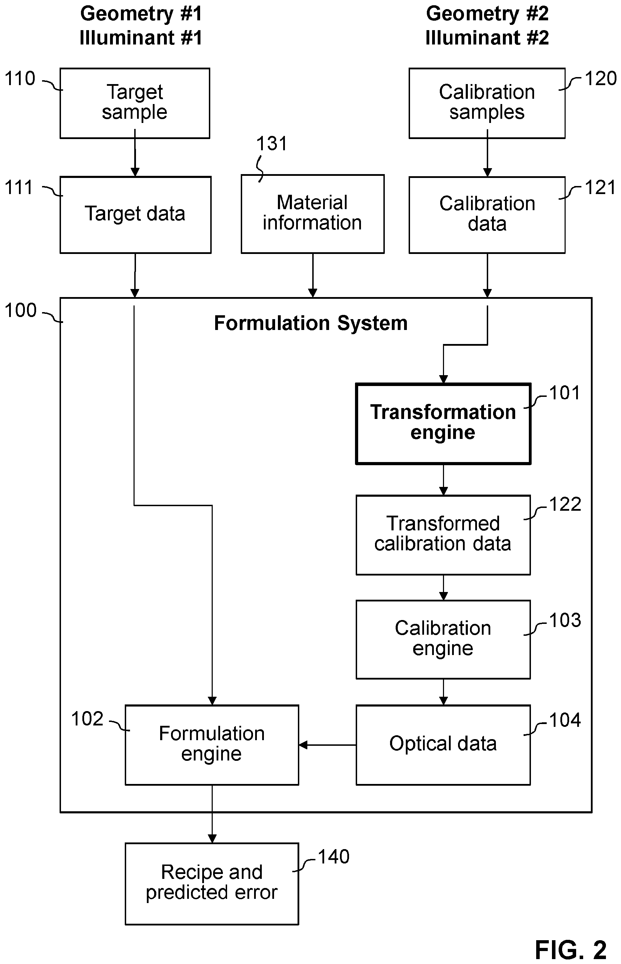

Fig. 2 shows a highly schematic representation of a color formulation system 100 and an associated method according to a second embodiment. As in the first embodiment, spectral target data 111 are acquired by carrying out spectral measurements on a target sample 110, using a spectrophotometer with a first set of measurement conditions.

In the present example, the formulation engine 102 expects, as its input, target data that have been acquired under the first set of measurement conditions, i.e., the formulation engine 102 is designed to be directly used with the spectral target data 111, without prior transformation. However, for carrying out its prediction tasks, the formulation engine requires optical data that are representative of light transport characteristics of a plurality of colorants under the first set of measurement conditions. Normally, this would require calibration data that have been acquired under the first set of measurement conditions.

However, in the example of Fig. 2, only calibration data 121 that have been acquired under the second set of measurement conditions are available. In order to be able to use the formulation engine 102 nevertheless, again a transformation engine 101 is provided. In the present example, the transformation engine 101 transforms the spectral calibration data 121 into transformed calibration data 122, which represent the expected spectral response of the calibration samples 120 under the first set of measurement conditions.

The calibration engine 103 now computes the optical data 104 based on the transformed calibration data 122. The resulting optical data 104 are now representative of light transport characteristics of a plurality of colorants under the first set of measurement conditions and can be used by the formulation engine 102 to carry out its prediction tasks.

If additionally also calibration data that have been acquired under the first set of measurement conditions are available, corresponding optical data may be directly computed from such calibration data and may also be used by the formulation engine 102. Such optical data may be stored in a third database.

For instance, the formulation engine 102 may be designed for receiving data from a new generation spectrophotometer, while calibration data for a large number of colorants may have been acquired with a previous ("legacy") generation spectrophotometer. These calibration data may be transformed using the transformation engine 101 so as to obtain optical data that are compatible with the new generation spectrophotometer. Calibration data for additional colorants may now be acquired with the new generation spectrophotometer and may be used to generate additional optical data in the third database.

Computer system: exemplary hardware

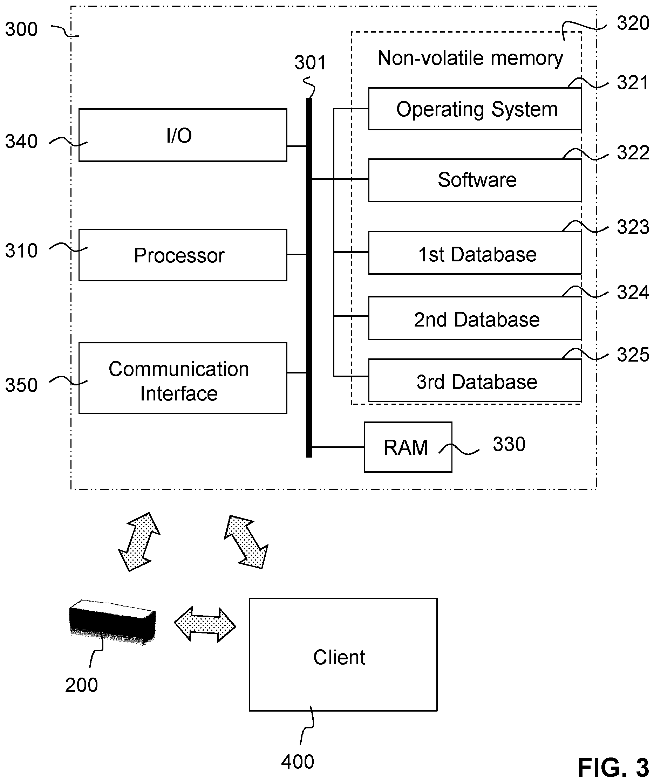

Figure 3 illustrates an exemplary hardware-oriented block diagram of a color formulation system. In this example, the color formulation system comprises two main components: a server computer 300 and a remote client computer 400, which may be located remotely from the server computer 300.

The various components of the server computer 300 communicate with each other via one or more buses 301, as it is well known in the art. The server computer 300 comprises one or more processors 310. The processors 310 may comprise, for instance, a single- or multicore CPU and a GPU, as it is well known in the art. The server computer 300 further comprises one or more non-volatile memory devices 320, such as a flash memory device and/or a hard disk drive. The non-volatile memory 320 stores, inter alia, the operating system 321 of the server computer 300 and several application programs, including software for implementing the transformation engine 101, the formulation engine 102 and the calibration engine 103. The non-volatile memory 320 further stores user data as well as the first, second and third databases 323, 324 and 325. The server computer 300 further comprises random-access memory (RAM) 330, and input/output (I/O) interface 340, and a communication interface 350. The communication interface 350 may include, e.g., one or more of an Ethernet interface, a WiFi interface, a Bluetooth™ interface etc. The communication interface may serve for communication with the remote client 400.

The remote client 400 may be set up similarly to the server computer 300. It comprises software that executes a user interface for controlling the server computer 300. Communication between the server computer 300 and the client computer 400 may take place via a wired or wireless network, e.g., via a LAN or a WAN, in particular, via the Internet.

The server computer 300 and/or the client computer 400 may further communicate with a spectrophotometer 200.

In other embodiments, the server computer is replaced by a cloud computer whose physical components are distributed at different physical locations. For instance, the databases 323-325 may be implemented in a distributed manner remotely from other components. In yet other embodiments, the computer system consists of only a single computer, which executes all of the above-mentioned software components.

Example of a user interface

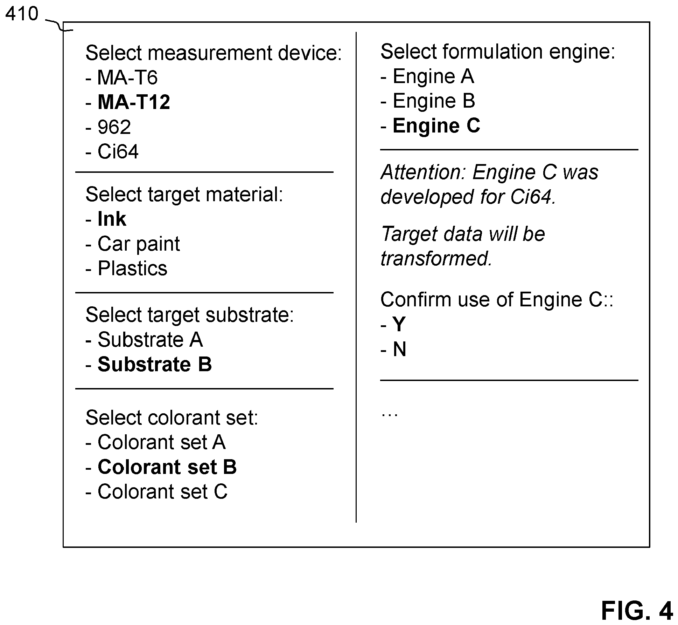

Figure 4 illustrates, in a highly schematic manner, a simple user interface 410 that may be implemented on the client computer 400.

The user interface prompts the user to first select the measurement device (spectrophotometer) that is used for determining the spectral target data. In the present example, the user interface presents a list of known devices to the user, and the user selects one of them. If the formulation system is able to recognize the source of the target data automatically (e.g., because the output of the measurement device contains an indication of the make and model of the device), this part of the user interface may be omitted or replaced by simply an indication of the device that was recognized by the formulation system.

The user interface then prompts the user to indicate the type of material that has been measured with the measurement device. In the present example, the user interface presents to the user a list of possible materials, and the user selects one of them. In the present example, the user has selected "ink".

The user interface then prompts the user to indicate the substrate to which the material was applied. In the present example, the user interface presents to the user a list of known substrates for ink, and the user selects one of them. In the present example, the user has selected "Substrate B".

The user interface then prompts the user to indicate a collection of colorants that are to be used for formulation. In the present example, the user has selected "Colorant set B".

The user interface now prompts the user to indicate a formulation engine that shall be used for predicting a recipe. In the present example, the user interface presents to the user a list of formulation engines that may be used together with the spectral target data and the specified type of target material. Here, the user interface takes into account that some formulation engines may not be suitable to be directly used with the spectral target data and the available calibration data, but may be used only after a transformation of either the spectral target data (first embodiment) or of the calibration data (second embodiment). If the user selects a formulation engine that requires transformation, the user interface may alert the user to this circumstance and may require confirmation.

Of course, the above implementation of the user interface is only highly schematic and oversimplistic, and more sophisticated implementations of a user interface are possible.

Application in a cloud environment

The different formulation engines that are presented to the user may physically be implemented in different computers. The user does not need to know where the formulation engines are physically implemented. From the perspective of the user, the formulation engines may simply be available as a service in the cloud.

Traditionally, formulation software has been provided as a locally installed application running on a computer at a user site. More recently, however, providers of formulation software have started to offer formulation software as a cloud-based service.

Making formulation software available in the cloud offers exciting new possibilities. For instance, a library of formulation engines with associated optical data and/or associated calibration data may be kept in the cloud, and new formulation engines with associated data may be added to the library at any time without a need to update software on the user's computer system. A user may get an opportunity to select the best-suited formulation engine and associated optical data or calibration data for a particular formulation task from the library. For instance, the user may choose between a new version of a certain formulation engine and a previous version.

The above-described transformations provide the necessary tools for using different formulation engines that are designed for using data acquired under different sets of measurement conditions even if target data are available only for other measurement conditions.

Examples for transformations

The basis of all transformations is the knowledge about at least selected aspects of light transport in the material of the target sample. In particular, certain properties of the Bidirectional Reflectance Distribution Function (BRDF) of the material of the target sample may be employed for the transformations. In Figs. 1 and 2, this knowledge is contained in the material information 131. The material information 131 may include one or more of the following items of information:

- Information about colorant types associated with the spectral input data.
- Information about one or more binders of a material associated with the spectral input data.
- Information about surface properties of a material associated with the spectral input data.
- Information about refraction properties of a material associated with the spectral input data.
- Information about a substrate associated with the spectral input data.
- Information about a suitable BRDF model that may be used with the spectral input data.
- If the spectral input data pertain to a layered sample: Information about a layer structure of the material and properties for at least one of the layers, e.g., smoothness, refractive index, composition, reflectance, transmittance.
- Isotropic or anisotropic. For anisotropic materials, the BRDF value changes depending on the rotation of the sample around its surface normal, for isotropic it does not.
- Fluorescence properties of the colorants. For non-fluorescent materials, the illuminant of the measurement conditions may be ignored. For fluorescent materials, models to transform from illumination conditions with UV to those without may be employed.
- Ability to maintain polarization: Here, similar considerations as for fluorescence apply. Materials that do not maintain polarization allow for straightforward transformations. Those with polarizing effect may require adaptation of the transformation.

Some of the material information 131 may also be used by the formulation engine 102 for properly carrying out its prediction tasks. In particular, the material information may further comprise information about one or more pre-existing recipes that yield an approximate match to the appearance of the target sample 110. The formulation engine may be configured to correct these pre-existing recipes rather than calculating a new recipe from scratch. Correction algorithms are well known in the art of color formulations.

The BRDF is a four-dimensional function $\rho(\theta_i, \varphi_i; \theta_o, \varphi_o)$, describing the ratio of the reflected radiance at inclination $\theta_o$ and azimuth $\varphi_o$ to the incident irradiance from inclination $\theta_i$ and azimuth $\varphi_i$. Expressed in terms of solid angles, we may also write the BRDF as function with two parameters $\rho(\omega_i, \omega_o)$, where $\omega_i$ indicates the solid angle from which irradiance is incident onto the sample surface, and $\omega_o$ indicates the solid angle into which radiance is reflected.

The BRDF is only defined for directions on the hemisphere $\Omega$ above the material. For the description of all following transformations, we are going to assume that the appearance of the target sample 110 and the calibration samples 120 can be expressed by a BRDF. That is, either their material or the substrate it is applied on is opaque or the measurements for determining the target data 111 and the calibration data 121 are carried out by placing the material onto an opaque backing. There is no light transmitted through the combination of material, substrate and backing. We will always consider $\rho$ as the combined BRDF of material, substrate and backing.

a) Between different 45/0 geometries

A 45/0 geometry is an example of a fixed-angle geometry. Spectrophotometer devices with measurement conditions that are summarized by the term "45/0" can have rather different arrangement of lamps. Three such arrangements are illustrated in Figs. 3A-3C.

In Fig. 3A, a single lamp 202 is arranged to illuminate a measurement spot on the surface of the sample 203 at an angle of 45° relative to the surface normal. Light that has been reflected from the measurement spot at an angle of 0° (i.e., parallel to the surface normal) is detected by a detector 201. This geometry is commonly designated as 45as45 (i.e., illumination at 45° to surface normal and detection at an aspecular angle of 45° from the specular direction towards the direction of incident light) or as 45/0.

In Fig. 3B, three lamps 202 are distributed on a circle so as to irradiate the measurement spot at an angle of 45° relative to the surface normal from three different azimuthal directions.

In Fig. 3C, a ring-shaped lamp 204 is used so as to evenly irradiate the measurement spot at an angle of 45° relative to the surface normal from the entire 360° range of azimuthal directions.

Common to all of these is the angle of 45° between direction of incident light on the sample and the sample's surface normal. In case of an isotropic BRDF, measurement values of all different kinds of 45/0 devices can be interchangeably used without any transformation.

b) Between different diffuse geometries

Integrating sphere spectrophotometers illuminate the material samples from all sides. They use a white, diffusely reflecting sphere that scatters - through many different paths - the light emitted by a lamp to the sample. In many of these devices, there is a so-called gloss trap in the gloss direction from the detector. This can be either closed - i.e. behaving like the rest of the sphere - or open, in which case no light will reach the detector from the specular reflection direction, i.e. as a reflection on a smooth surface of the material sample.

This is illustrated in Figs. 4A and 4B. In each of these figures, an integrating sphere spectrophotometer is schematically illustrated. The integrating sphere spectrophotometer comprises a hollow sphere 206 having a diffusely reflective white inner surface. The integrating sphere causes a uniform scattering or diffusing effect. Light rays incident on any point on the inner surface are, by multiple scattering reflections, distributed equally to all other points. The effects of the original direction of light are minimized. The sphere 206 has an entrance port at which a lamp is arranged and an exit port at which a detector 201 is arranged. The exit port is arranged at an angle of 8° to the surface normal of the sample 203. This geometry is generally referred to as "D/8". In the embodiment of Fig. 4A, a gloss trap 205 is arranged at the specular direction from the exit port to exclude the specular contribution to the total reflectance ("specular excluded" or briefly "spex"). In the embodiment of Fig. 4B, no gloss trap is present, and light that has been reflected at the sample surface from the specular direction can reach the detector 201 ("specular included" or "spin").

To translate measurement data between the two different arrangements ("spex" and "spin"), the surface properties of the material sample needs to be known. For a smooth surface, the fraction of light being reflected into the ideal specular direction is described by the Fresnel equations. They require the angle of incidence and the refractive index of the material and the surrounding medium. Then, the fraction $R_{surf}$ of reflected light (for unpolarized incident light) is:

$$R_{surf} = \frac{R_{surf,p} + R_{surf,s}}{2}$$

$$R_{surf,p} = \left| \frac{n_1 \cos(\theta_t) - n_2 \cos(\theta_i)}{n_1 \cos(\theta_t) + n_2 \cos(\theta_i)} \right|^2$$

$$R_{surf,s} = \left| \frac{n_1 \cos(\theta_i) - n_2 \cos(\theta_t)}{n_1 \cos(\theta_i) + n_2 \cos(\theta_t)} \right|^2$$

where $R_{surf,p}$ and $R_{surf,s}$ are the reflected ratios for p-polarized and s-polarized light respectively. $n_1$ is the refractive index of the surrounding medium and $n_2$ the refractive index of the material. In our case, the surrounding medium is typically air, hence $n_1$ is 1.0, and $n_2$ must be known. $\theta_i$ is the angle between the direction of incident light and the surface normal, in the case of a D/8 measurement device $\theta_i = 8°$. $\theta_t$ is the respective angle after refraction at the material surface. This can be computed using Snell's law.

If the material has a smooth surface, the reflected light $R_{surf}$ is the only difference between the specular included and specular excluded measurement values:

$$R_{spin} = R_{surf} + R_{spex}$$

For this reason, $R_{spin}$ can be computed from $R_{spex}$ and vice versa by a simple transformation that consists of adding $R_{surf}$ to $R_{spex}$ or subtracting $R_{surf}$ from $R_{spin}$, respectively.

The material information that needs to be known is the refractive index $n_2$ of the material at the surface of the target object.

c) Between multi-angle and 45/0 or diffuse geometries

Multi-angle devices offer much more information about the material sample by acquiring multiple reflectance spectra $R_g$ for various geometries g ∈ G. Here, G is the set of all measurement geometries captured by the device.

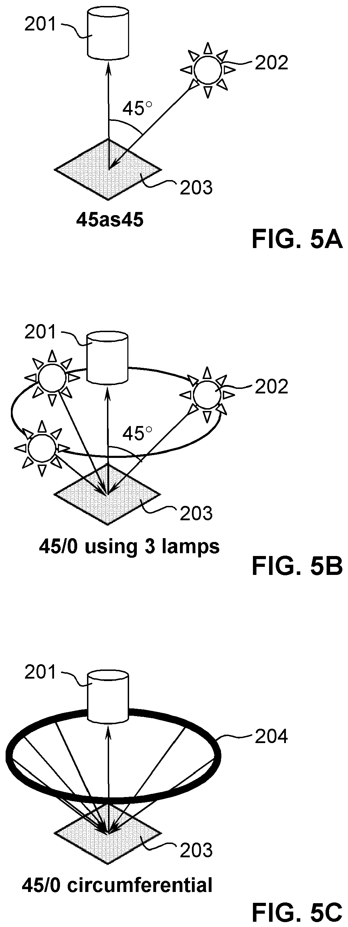

Fig. 5 schematically illustrates a multi-angle spectrophotometer. Lamps 202 are arranged to irradiate a measurement spot on the surface of the sample 203 at a plurality of different directions relative to the surface normal. In many known devices, these directions are all in the same plane, i.e., the azimuthal angle is the same for all lamps. However, also arrangements with lamps at different azimuthal directions have been proposed, which are particularly useful for measuring samples comprised of optically anisotropic materials. One or more detectors 201 measure the reflected light from the surface along one or more detection directions.

The material information 131 about the material and substrate can be used for selecting a suitable parametric Bidirectional Reflectance Distribution Function (BRDF) $\rho_c$ with parameters c. Assuming the number of BRDF model parameters is less than or equal to the number of measurement geometries, the parameters can be fitted to the measured reflectance spectra by minimizing the sum of distances.

$$\underset{c}{\mathrm{argmin}} \sum_{g \in G} \mathrm{distance}\big(\rho_c(\omega_{i,g}, \omega_{o,g}), R_g\big)$$

A common choice for the distance function would be the $L^2$ or $L^1$ norm.

In case of an anisotropic BRDF, G should contain off-plane geometries, i.e., not all detectors 201 and lamps 202 of the multi-angle spectrophotometer should lie in the same plane in space. Alternatively, multiple measurements capturing the sample 203 in different azimuthal orientations could be used during fitting.

Once the parameters c have been determined, the parametric BRDF model $\rho_c$ can be used to predict the reflectance for any new pair of solid angles $\omega_i, \omega_o$.

This offers the possibility of transforming multi-angle spectral data into spectral data that are expected to be obtained by a different multi-angle spectrophotometer, by a 45/0 spectrophotometer or by an integrating sphere spectrophotometer. In the case of a different multi-angle spectrophotometer or a 45/0 spectrophotometer, the BRDF may simply be evaluated for the required geometries. In the case of a diffuse integrating sphere geometry, the transformed spectral data can be computed as the integral over the full hemisphere $\Omega$ ("spin") or excluding gloss directions $\Theta = \Omega \setminus \omega_r$ ("spex") of incident light directions above the sample surface. The excluded solid angle $\omega_r$ is known from the device geometry.

$$R_{spin} = \int_{\Omega} \rho_c(\omega_i, \omega_o) \cos(\theta_i)\, d\omega_i$$

$$R_{spex} = \int_{\Theta} \rho_c(\omega_i, \omega_o) \cos(\theta_i)\, d\omega_i$$

The material information 131 that needs to be known include the information that is necessary to select a suitable BRDF model.

d) Between 45/0 and diffuse geometries

In some materials, the material appearance is formed by a specular reflection at a smooth surface and a diffuse flow inside the material itself. If the scattering inside the material is sufficiently isotropic, the diffuse flow can be treated as a constant $R_{int}$. Then, the spectral reflectance measured by a 45as45 instrument, i.e., one detector at 0° and one lamp at 45° incidence, is:

$$R_{45as45} = (1 - F_{45})(1 - F_0)R_{int} \cos\big(\theta_{t(45)}\big)$$

The term $1 - F_\theta$ denotes the fraction of light incident from angle $\theta$ that is *transmitted* through the interface into the material according to the Fresnel equations as described above. Due to reciprocity, the fraction of light transmitted out of the material into a detector at angle $\theta$ can be expressed the same way.

Note that the fraction of light *reflected* at the interface is omitted from the equation, as the detector is not positioned in the specular reflection direction. $\theta_{t(45)}$ is the respective angle after refraction at the material surface. This can be computed using Snell's law.

Similarly, the spectral reflectance measured by a diffuse sphere with a gloss trap ("spex") is:

$$R_{spex} = \int_{\Theta} \big(1 - F_{\theta_i}\big)(1 - F_8)R_{int} \cos\big(\theta_{t(i)}\big)\, d\theta_i$$

As before, the fraction of light *reflected* at the interface is omitted, since the specular reflection direction of the detector is covered by the gloss trap, which specifically prevents any light reaching the surface from that direction.

Both equations can now be solved for $R_{int}$ and used to compute $R_{spex}$ from $R_{45as45}$ and vice versa:

$$\frac{R_{45as45}}{(1-F_{45})(1-F_0)\cos\left(\theta_{t(45)}\right)} = R_{int} = \frac{R_{spex}}{\int_{\Theta}\left(1-F_{\theta_i}\right)(1-F_8)\cos\left(\theta_{t(i)}\right)d\theta_i}$$

Further conversion from and to $R_{spin}$ is possible via the considerations discussed above in section b).

Further conversion from and to other 45/0 geometries is possible as described above in section a).

The required material information are the refraction index $n_2$ for computing the Fresnel equations and the sub-surface scattering characteristics for confirming the presence of an internal diffuse flow $R_{int}$.

e) Between multi-angle and 45/0 geometries

If the multi-angle device has a geometry with a detector at 0° and a lamp at 45°, its spectral reflectance measurement can directly be used as $R_{45as45}$ and - in case the material has an isotropic BRDF - interchangeably used as any 45/0 measurement as explained above in section a).

If the multi-angle device has no such geometry, or the material exhibits anisotropic behavior, a parametric BRDF model may be fitted to the multi-view data as described above in section c) and used to compute a spectral

reflectance measurement $R_{45as45} = \rho_c(45°, 0°: 0°, 0°)$ or $R_{45/0} = \int_{\phi_i=0}^{2\pi}\rho_c(45°, \varphi_i; 0°, 0°)d\varphi_i$ for the circumferential configuration.

If target data 102 from a multi-angle device and calibration data 107 from a 45/0 instrument are available, the measured or computed $R_{45as45}$ of the multi-angle-device may be used as the transformed target measurement 103. For the reverse case, i.e., target data 102 acquired under a 45/0 geometry and multi-angle calibration data 107, the measured or computed $R_{45as45}$ from the multi-angle calibration data may be used as the transformed calibration data 109.

f) Between different illumination characteristics

Transformations may also be applied in the same spirit to take different illumination conditions into account. In particular:

- Fluorescence: In the presence of fluorescent ingredients in the material, the color of the material can no longer be expressed by a simple, wavelength-dependent fraction between incident and exitant flux. However, research has shown that fluorescence is undirected, i.e., it is an isotropic effect. That is, if the fluorescent ingredients are sufficiently characterized, the transformation of the measurement data between two measurement conditions having different lamp spectral power distributions can be considered independently from the geometric arrangement of detector and lamp.
- If the spectral target data 111 or the calibration data 121 were acquired under directional illumination from a fixed direction (e.g., in a 45/0 geometry or in a multi-angle geometry), and if the material information 131 indicates that the material surface maintains the polarization of light, the polarized portions of the Fresnel equations can be used in the transformation engine 101.

Modifications

Many modifications are possible without leaving the scope of the inventions as defined in the appended claims.

In particular, the method may readily be extended to consider not only color, but also other aspects of appearance such as texture or gonioapparent properties.

**Claims**

1. A color formulation system (100) comprising a transformation engine (101), a formulation engine (102), and a first database (323),

     wherein the color formulation system (100) is configured to receive spectral target data (111) that are representative of a spectral response of a target sample (110) under a first set of measurement conditions, the first set of measurement conditions including at least one first measurement geometry and at least one first illumination characteristic,

wherein the first database (323) comprises optical data (104) that are representative of light transport characteristics of a plurality of colorants under a second set of measurement conditions, the second set of measurement conditions including at least one second measurement geometry and at least one second illumination characteristic, at least one of the measurement conditions in the second set being different from at least one of the measurement conditions in the first set,

wherein the transformation engine (101) is configured to receive spectral input data and to carry out a transformation of said spectral input data into transformed spectral data, the spectral input data being the spectral target data (111) and the transformed spectral data being transformed target data (112) representing a predicted spectral response of the target sample (110) under the second set of measurement conditions, and

wherein the formulation engine (102) is configured to predict a recipe (140) for a candidate material that is expected to match an appearance of the target sample (110), using the transformed target data (112) and the optical data (104) in the first database (323).

2. The color formulation system (100) of claim 1, further comprising:

a second database (324) comprising spectral calibration data (121) that are representative of spectral responses of a plurality of calibration samples (120) under the second set of measurement conditions, and
a calibration engine (103) configured to compute said optical data (104) based on the calibration data (122) in the second database (324) and to store the computed optical data (104) in the first database (323).

3. A color formulation system (100) comprising a transformation engine (101), a formulation engine (102), a calibration engine (103), a first database (323), and a second database (324),

wherein the color formulation system (100) is configured to receive spectral target data (111) that are representative of a spectral response of a target sample (110) under a first set of measurement conditions, the first set of measurement conditions including at least one first measurement geometry and at least one first illumination characteristic,

wherein the second database (324) comprises spectral calibration data (121) that are representative of spectral responses of a plurality of calibration samples (120) under a second set of measurement conditions, the second set of measurement conditions including at least one second measurement geometry and at least one second illumination characteristic, at least one of the measurement conditions in the second set being different from at least one of the measurement conditions in the first set,

wherein the transformation engine (101) is configured to receive spectral input data and to carry out a transformation of said spectral input data into transformed spectral data, the spectral input data being the spectral calibration data (121) in the second database (324) and the transformed spectral data being transformed calibration data (122) representing a predicted spectral response of the calibration samples (120) under the first set of measurement conditions,

wherein the calibration engine (103) is configured to compute optical data (104) based on the transformed calibration data (122) and to store the computed optical data (104) in the first database (323), the computed optical data (104) being representative of light transport characteristics of a plurality of colorants under the first set of measurement conditions, and

wherein the formulation engine (102) is configured to predict a recipe (140) for a candidate material that is expected to match an appearance of the target sample (110), using the spectral target data (111) and the optical data (104) in the first database (323).

4. The color formulation system of claim 3, further comprising a third database (325) comprising additional optical data that have been computed from spectral calibration data (121) that are representative of spectral responses of the same or different calibration samples (120) under the first set of measurement conditions, wherein the formulation engine (102) is configured to predict the recipe (140) using the third database (325) in addition to the first database (323).

5. The color formulation system of any one of the preceding claims,

comprising a plurality of formulation engines (102),
wherein the color formulation system comprises a user interface (410) that is configured to prompt a user to select a formulation engine that is to be used for predicting the recipe.

6. The color formulation system of any one of the preceding claims,

wherein the transformation engine (101) is configured to receive material information (131) and to take the material information (131) into account when carrying out said transformation,
wherein the material information (131) comprise at least one of the following items of information:

- information about colorant types associated with the spectral input data;
- information about one or more binders of a material associated with the spectral input data;
- information about surface properties of a material associated with the spectral input data;
- information about refraction properties of a material associated with the spectral input data;
- information about scattering properties of a material associated with the spectral input data;
- information about fluorescence properties of a material associated with the spectral input data;
- information about polarization properties of a material associated with the spectral input data;
- information about a substrate on which a material associated with the spectral input data has been applied; and
- information about one or more pre-existing recipes that yield an approximate match to the appearance of the target sample (110).

7. The color formulation system of any one of the preceding claims,

wherein the first and second measurement geometries are integrating sphere geometries, one of said integrating sphere geometries being of a specular-included type and the other one being of a specular-excluded type, and wherein the transformation comprises computing a refraction term and adding the refraction term to the spectral input data or subtracting the refraction term from the spectral input data, the refraction term being indicative of a fraction of light being reflected into a specular direction.

8. The color formulation system of any one of claims 1-6, wherein the transformation engine is configured to carry out the steps of:

determining at least one parameter of a model of light transport, in particular, of a BRDF model, based on the spectral input data;
computing the transformed spectral data using the model of light transport.

9. The color formulation system of claim 8,
wherein a measurement geometry associated with the spectral input data is a first multi-angle geometry and a measurement geometry associated with the transformed spectral data is a second multi-angle geometry, a fixed-angle geometry, in particular, a 45/0 geometry, or an integrating sphere geometry.

10. The color formulation system of any one of the claims 1-6,

wherein one of the first and second measurement geometries is an integrating sphere geometry and the other one is a fixed-angle geometry, in particular, a 45/0 geometry, and
wherein the transformation comprises computing an integral over fractions of light that are able to enter and exit a material associated with the spectral input data, the integral being executed over a hemisphere, and relating said integral to a fraction of light that is able to enter and exit the material under the fixed-angle geometry.

11. A system for determining optical data to be used in color formulation, the optical data being representative of light transport characteristics of a plurality of colorants under a first set of measurement conditions, the first set of measurement conditions including at least one first measurement geometry and at least one first illumination characteristic, the system comprising:

a transformation engine (101), a calibration engine (103), a first database (323), and a second database (324), wherein the second database (324) comprises spectral calibration data (121) that are representative of spectral responses of a plurality of calibration samples (120) under a second set of measurement conditions, the second set of measurement conditions including at least one second measurement geometry and at least one second illumination characteristic, at least one of the measurement conditions in the second set being different from at least one of the measurement conditions in the first set,
wherein the transformation engine (101) is configured to receive spectral input data and to carry out a transformation of said spectral input data into transformed spectral data, the spectral input data being the spectral calibration data (121) in the second database (324) and the transformed spectral data being transformed calibration data (122) representing a predicted spectral response of the calibration samples (120) under the first set of measurement conditions,

wherein the calibration engine (103) is configured to compute optical data (104) based on the transformed calibration data (122) and to store the computed optical data (104) in the first database (323), the computed optical data (104) being representative of light transport characteristics of a plurality of colorants under the first set of measurement conditions.

12. A computer-implemented method of color formulation, the method comprising:

receiving spectral target data (111) that are representative of a spectral response of a target sample (110) under a first set of measurement conditions, the first set of measurement conditions including at least one first measurement geometry and at least one first illumination characteristic,

retrieving, from a first database (323), optical data (104) that are representative of light transport characteristics of a plurality of colorants under a second set of measurement conditions, the second set of measurement conditions including at least one second measurement geometry and at least one second illumination characteristic, at least one of the measurement conditions in the second set being different from at least one of the measurement conditions in the first set;

carrying out a transformation of the spectral target data (111) into transformed target data (112) representing an expected spectral response of the target sample (110) under the second set of measurement conditions, and

predicting a recipe (140) for a candidate material that is expected to match an appearance of the target sample (110), using the transformed target data (112) and the optical data (104) in the first database (323).

13. A computer-implemented method of color formulation, the method employing a first database (323) and a second database (324), the method comprising:

receiving spectral target data (111) that are representative of a spectral response of a target sample (110) under a first set of measurement conditions, the first set of measurement conditions including at least one first measurement geometry and at least one first illumination characteristic,

retrieving, from the second database (324), spectral calibration data (121) that are representative of spectral responses of a plurality of calibration samples (120) under a second set of measurement conditions, the second set of measurement conditions including at least one second measurement geometry and at least one second illumination characteristic, at least one of the measurement conditions in the second set being different from at least one of the measurement conditions in the first set;

carrying out a transformation of the spectral calibration data (121) into transformed calibration data (122) representing an expected spectral response of the calibration samples (110) under the first set of measurement conditions,

computing optical data (104) based on the transformed calibration data (122) and storing the computed optical data (104) in the first database (323), the computed optical data (104) being representative of light transport characteristics of a plurality of colorants under the first set of measurement conditions, and

predicting a recipe (140) for a candidate material that is expected to match an appearance of the target sample (110), using the spectral target data (112) and the optical data (104) in the first database (323).

14. A computer-implemented method of determining optical data to be used in color formulation, the optical data being representative of light transport characteristics of a plurality of colorants under a first set of measurement conditions, the first set of measurement conditions including at least one first measurement geometry and at least one first illumination characteristic, the method employing a first database (323) and a second database (324), the method comprising:

retrieving, from the second database (324), spectral calibration data (121) that are representative of spectral responses of a plurality of calibration samples (120) under a second set of measurement conditions, the second set of measurement conditions including at least one second measurement geometry and at least one second illumination characteristic, at least one of the measurement conditions in the second set being different from at least one of the measurement conditions in the first set;

carrying out a transformation of the spectral calibration data (121) in the second database (324) into transformed calibration data (122) representing a predicted spectral response of the calibration samples (120) under the first set of measurement conditions; and

computing optical data (104) based on the transformed calibration data (122) and storing the computed optical data (104) in the first database (323), the computed optical data (104) being representative of light transport characteristics of a plurality of colorants under the first set of measurement conditions.

**Geometry #1**
**Illuminant #1**

**Geometry #2**
**Illuminant #2**

110 — Target sample

120 — Calibration samples

131 — Material information

111 — Target data

121 — Calibration data

100 — **Formulation System**

101 — **Transformation engine**

112 — Transformed target data

103 — Calibration engine

102 — Formulation engine

104 — Optical data

140 — Recipe and predicted error

**FIG. 1**

**Geometry #1
Illuminant #1**

**Geometry #2
Illuminant #2**

110 — Target sample

120 — Calibration samples

131 — Material information

111 — Target data

121 — Calibration data

100 — **Formulation System**

101 — **Transformation engine**

122 — Transformed calibration data

103 — Calibration engine

102 — Formulation engine

104 — Optical data

140 — Recipe and predicted error

## FIG. 2

300

301

340 — I/O

310 — Processor

350 — Communication Interface

320 — Non-volatile memory

321 — Operating System

322 — Software

323 — 1st Database

324 — 2nd Database

325 — 3rd Database

330 — RAM

200

Client

400

**FIG. 3**

410

Select measurement device:
- MA-T6
- **MA-T12**
- 962
- Ci64

---

Select target material:
- **Ink**
- Car paint
- Plastics

---

Select target substrate:
- Substrate A
- **Substrate B**

---

Select colorant set:
- Colorant set A
- **Colorant set B**
- Colorant set C

Select formulation engine:
- Engine A
- Engine B
- **Engine C**

---

*Attention: Engine C was developed for Ci64.*

*Target data will be transformed.*

Confirm use of Engine C::
- Y
- N

---

...

**FIG. 4**

**45as45**

**FIG. 5A**

**45/0 using 3 lamps**

**FIG. 5B**

**45/0 circumferential**

**FIG. 5C**

205
201
206
8°
202
203

**D/8, Specular excluded**

## FIG. 6A

201
206
8° 8°
202
203

**D/8, Specular included**

## FIG. 6B

**Multi-angle**

**FIG. 7**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/070148 A1 (PPG IND OHIO INC [US]) 14 May 2015 (2015-05-14) | 1-6,12, 13 | INV. G01J3/46 |
| Y | * paragraphs [0002] – [0004], [0010], | 11,14 | G01N21/27 |
| A | [0026] – [0036]; claim 1; figures 1,7 * | 7-10 | |
| A | EP 3 937 138 A1 (X RITE EUROPE GMBH [CH]) 12 January 2022 (2022-01-12) * paragraphs [0083] – [0094]; figures 1,2,3 * | 1-10,12, 13 | |
| Y | US 2021/381896 A1 (XU ZHILING [US] ET AL) 9 December 2021 (2021-12-09) * paragraphs [0005], [0015], [0023], [0027]; claims 4,5; figures 1-5 * | 11,14 | |
| Y | EP 3 594 954 A2 (VIAVI SOLUTIONS INC [US]) 15 January 2020 (2020-01-15) * paragraphs [0024], [0034] – paragraphs [0025], [0034]; figures 1B,1C * | 11,14 | |
| A | US 2021/131874 A1 (XU ZHILING [US]) 6 May 2021 (2021-05-06) * paragraphs [0002], [0007]; claim 1; figure 2 * | 11,14 | TECHNICAL FIELDS SEARCHED (IPC) G01J G01N |

The present search report has been drawn up for all claims

| Place of search | Date of completion of the search | Examiner |
|---|---|---|
| Munich | 3 August 2023 | Hambach, Dirk |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

**Application Number**

**EP 22 19 4217**

The Search Division considers that the present European patent application does not comply with the requirements of unity of invention and relates to several inventions or groups of inventions, namely:

**1. claims: 1-10, 12, 13**

      **Color formulation system**

        ---

**2. claims: 11, 14**

      **Determination of optical data of colorants**

        ---

## ANNEX TO THE EUROPEAN SEARCH REPORT
## ON EUROPEAN PATENT APPLICATION NO.

EP 22 19 4217

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2023

| Patent document cited in search report | | | Publication date | Patent family member(s) | | | Publication date |
|---|---|---|---|---|---|---|---|
| WO 2015070148 | A1 | | 14-05-2015 | AR | 098361 | A1 | 26-05-2016 |
| | | | | AU | 2014346447 | A1 | 16-06-2016 |
| | | | | CA | 2930024 | A1 | 14-05-2015 |
| | | | | CN | 105899919 | A | 24-08-2016 |
| | | | | EP | 3066437 | A1 | 14-09-2016 |
| | | | | HK | 1223150 | A1 | 21-07-2017 |
| | | | | JP | 2016535851 | A | 17-11-2016 |
| | | | | JP | 2018112563 | A | 19-07-2018 |
| | | | | KR | 20160085826 | A | 18-07-2016 |
| | | | | MX | 364361 | B | 24-04-2019 |
| | | | | NZ | 631047 | A | 30-10-2015 |
| | | | | TW | 201525441 | A | 01-07-2015 |
| | | | | US | 2015134269 | A1 | 14-05-2015 |
| | | | | WO | 2015070148 | A1 | 14-05-2015 |
| EP 3937138 | A1 | | 12-01-2022 | CN | 116057581 | A | 02-05-2023 |
| | | | | EP | 3937138 | A1 | 12-01-2022 |
| | | | | EP | 4179507 | A1 | 17-05-2023 |
| | | | | WO | 2022009117 | A1 | 13-01-2022 |
| US 2021381896 | A1 | | 09-12-2021 | NONE | | | |
| EP 3594954 | A2 | | 15-01-2020 | CN | 110715730 | A | 21-01-2020 |
| | | | | CN | 115046944 | A | 13-09-2022 |
| | | | | EP | 3594954 | A2 | 15-01-2020 |
| | | | | JP | 7046875 | B2 | 04-04-2022 |
| | | | | JP | 2020024191 | A | 13-02-2020 |
| | | | | JP | 2022106697 | A | 20-07-2022 |
| | | | | KR | 20200006937 | A | 21-01-2020 |
| | | | | KR | 20230034271 | A | 09-03-2023 |
| | | | | US | 2020018691 | A1 | 16-01-2020 |
| | | | | US | 2021208059 | A1 | 08-07-2021 |
| | | | | US | 2023160812 | A1 | 25-05-2023 |
| US 2021131874 | A1 | | 06-05-2021 | NONE | | | |

EPO FORM P0459

For more details about this annex : see Official Journal of the European Patent Office, No. 12/82